# EUROPÄISCHE PATENTSCHRIFT

(11) **EP 1 375 292 B1**
(45) Veröffentlichungstag und Bekanntmachung des Hinweises auf die Patenterteilung: **10.03.2010**
(21) Anmeldenummer: 03405436.1
(22) Anmeldetag: 18.06.2003
(51) Int. Cl.: B62B 3/00

(54) **Seitenrahmen einer Palette und Palettenanordnung**
Pallet side frame and pallet assembly
Chassis latéral d'une palette et système de palette

(30) Priorität: 21.06.2002 CH 10622002
(43) Veröffentlichungstag der Anmeldung: 02.01.2004
(73) Patentinhaber: Georg Utz Holding AG, 5620 Bremgarten (CH)
(72) Erfinder: Dubois, Jean-Marc, 56200 Bremgarten (CH); Schwab, Boris, 5300 Vogelsang bei Turgi (CH)
(74) Vertreter: Spierenburg, Pieter

(56) Entgegenhaltungen:
- EP-A- 1 176 079
- AU-B- 514 192
- DE-U- 8 705 764
- FR-A- 2 142 088
- GB-A- 2 024 735
- US-A- 4 097 097
- US-A- 5 875 904

## Beschreibung

Die Erfindung betrifft eine Vorrichtung nach dem Oberbegriff des Patentanspruchs 1.

Eine solche Vorrichtung ist beispielsweise als sogenannter Kommissionierroller aus dem Euro-Katalog 2001 der Fa. Utz AG auf Seite 99 gezeigt und besteht aus einer auf Rollen fahrbaren, im Wesentlichen rechteckigen Bodenplatte und auf dieser befestigbaren, sich gegenüberstehenden gitterförmigen Wandelementen. Die Wandelemente sind dabei direkt auf der Bodenplatte befestigt, d.h. sie befinden sich innerhalb der Aussenkontur der Bodenplatte. Die Wandelemente sind ferner auf den Breitseiten der Bodenplatte vorgesehen, d e zur Stabilisierung aufstehende Stege aufweist. Die Wandelemente bestehen aus einem rohrförmigen Rahmen mit Längs- und Querstäben und sind im unteren 3ereich mit einem Querrohr verbunden. Das Querrohr wird von zwei Befestigungsfedern auf der Bodenplatte gehalten, wodurch die Wandelemente zueinander kippbar sind. Mittels Zurrgurten werden die Wandelemente der mit Kartonschachteln, Stapelbehältern oder dergleichen beladenen Transportvorrichtung zueinander gezogen, wodurch die Kartonschachteln ausreichend stabil von der Transportvorrichtung gehalten werden.

Bei etwas grössere Ausmassen der Behältnissen als der bodennahe Abstand zwischen den Wandelementen weichen diese leicht nach aussen, so dass die oberen Behältnissen nicht genügend stabil gehalten werden, es sei denn, dass auf beiden Seiten Zurrgurten vorgesehen sind.

Aus FR-A-2 142 088 ist ferner eine Vorrichtung zum Transport von Behältnissen bekannt, mit einer auf Rollen fahrbaren, im wesentlichen rechteckigen Bodenplatte und auf dieser befestigbaren, sich gegenüberliegenden Wandelementen, die aus einem U-förmigen Rohr und einem vom Rohr gehaltenen Gitter bestehen. Jedes Wandelement enthält zwei vertikale, im Wesentlich en rohrförmige Pfosten sowie ein dazwischen liegendes Gitter. Das Gitter besteht aus sich kreuzenden Bändern, Stangen oder Drähten. Die oberen Teile der Pfosten werden durch eingesetzte Streben in festem gegenseitigen Abstand gehalten. Mittels eines Hebelmechanismus mit Gelenkhebeln können die Pfosten am unteren Ende auseinander gedrückt werden, um das Wandelement zu entfernen.

Auch bei dieser Vorrichtung werden die Wandelemente ebenfalls nach aussen gedrückt, wenn Behältnisse mit einem grösserem Ausmass zwischen den Wandelementen gehalten werden müssen, und es sind deshalb Zurrgurten notwendig.

Der vorliegenden Erfindung liegt nun die Aufgabe zugrun de, eine Vorrichtung der vorgenannten Art derart zu verbessern, dass Behältnisse mit einem etwas grösseren Ausmass über die ganze Höhe von den Wandelementen stabil gehalten werden.

Diese Aufgabe wird durch eine Vorrichtung mit den Merkmalen des Patentanspruchs 1 gelöst.

Die Erfindung hat den grossen Vorteil, dass nunmehr auf Zurrgurten verzichtet werden kann. Auch die Herstellung ist einfacher, da keine Gitter mehr an den rohrförmigen Rahmen angeschweisst werden müssen. Die Wandelemente können ferner einfach von der Bodenplatte entfernt werden, so dass der Transport von leeren Transportvorrichtungen raumsparend erfolgen kann.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine erste Ausführung der Transportvorrichtung,
- Fig. 2: eine zweite Ausführung der Transportvorrichtung, und
- Fig. 3: eine dritte Ausführung der Transportvorrichtung.

In den Figuren sind für dieselben Elemente jeweils dieselben Bezugszeichen verwendet worden und erstmalige Erklärungen betreffen alle Figuren, wenn nicht ausdrücklich anders erwähnt.

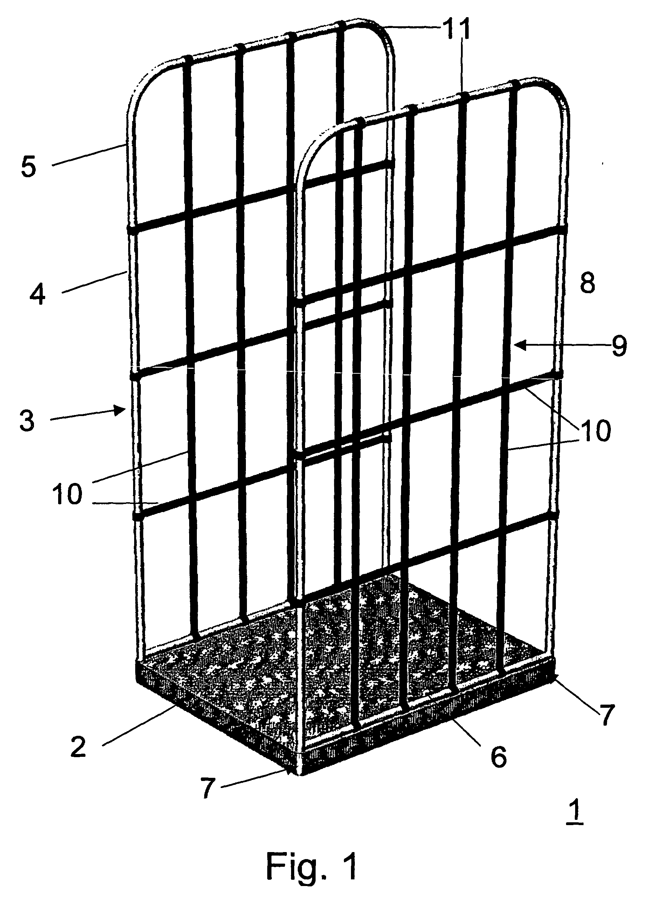

In der Figur 1 ist eine Transportvorrichtung 1 mit einer im Wesentlichen rechteckigen Bodenplatte 2 und zwei sich gegenüberstehenden gitterförmigen Wandelementen 3 gezeigt. Die unterhalb der Bodenplatte 2 angeordneten, üblichen Rollen sind hier nicht weiter dargestellt. Das Wandelement 3 besteht aus einem U-förmigen Rahmen 4 aus einem Rohr 5, der im unteren Bereich einen Querrohr 6 und somit vorstehende Rohrstücke 7 aufweist, die in entsprechende Bohrungen 8 in der Bodenplatte 2 eingesteckt sind. Das Wandelement 3 weist ferner ein flexibles Gitter 9 aus Textilbändern 10 auf, die das Rohr 5 an ihren Enden umschlingen. Die Bänder 10 sind dabei in der Art eines Gewebes übereinander gelegt. Anstelle von Bändern 10 aus Textil können diese auch aus einem Kunststoffmaterial gefertigt sein, wobei die Umschlingung von einem rohrförmigen Haken 11 gebildet ist, der einfach auf das Rohr 5 bzw. das Querrohr 6 aufgeschnappt ist.

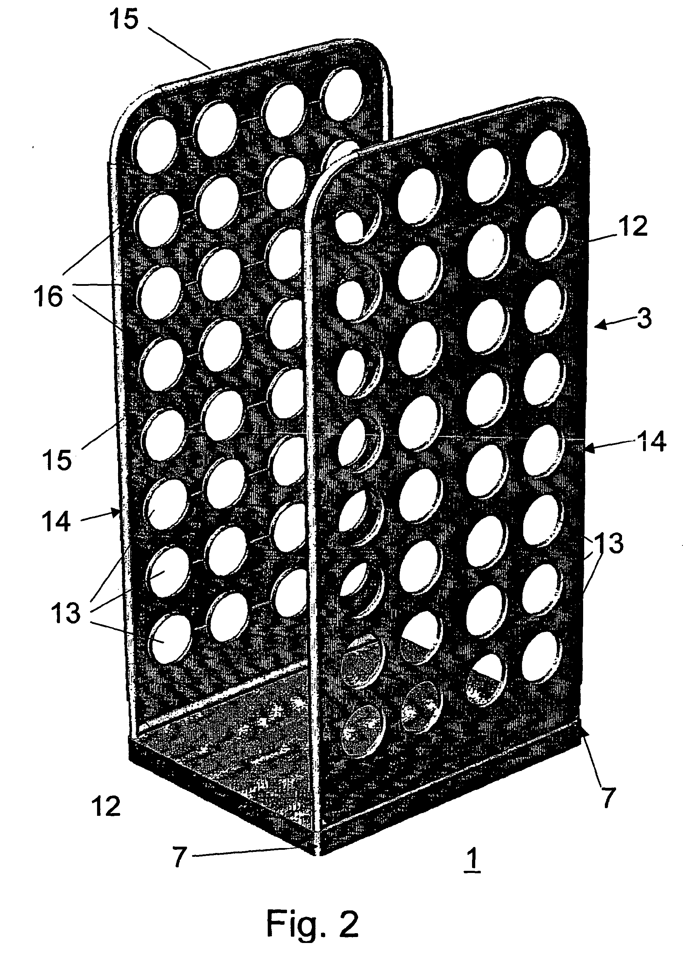

In Figur 2 ist eine zweite Variante der Transportvorrichtung 1 gezeigt, wobei hier das Wandelement 3 eine ebene flexible Platte 12 aufweist, die in einem regelmässigen, orthogonalen Raster mit kreisrunden Löchern 13 und an den Längsseiten 14 je mit einem Rohrstück 15 versehen ist. Das Rohrstück 15 weist dabei einen (nicht ersichtlichen) Längsschlitz auf, wodurch die Rohrstücke 15 auf das Rohr 5 und auf das Querrohr 6 aufgeschnappt sind. Wie ersichtlich sind die Löcher 13 mit einem kleinen nach innen aufstehenden Rand 16 versehen, damit die Platte 12 eine grössere Stabilität erhält.

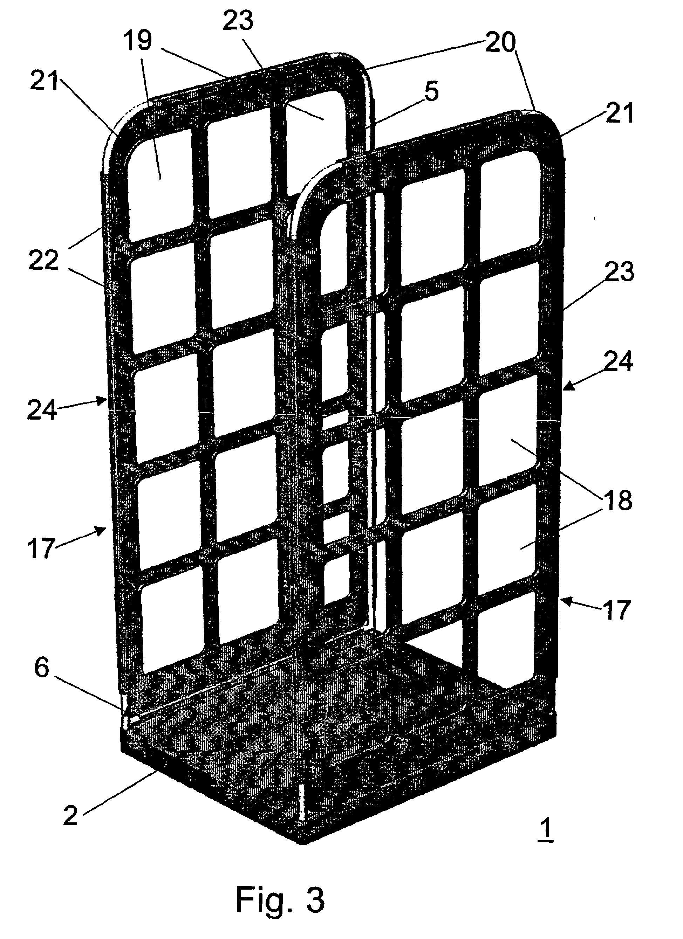

In Figur 3 ist eine dritte Variante der Transportvorrichtung 1 gezeigt, wobei hier das Wandelement 3 ebenfalls eine ebene flexible Platte 17 aufweist, die in einem regelmässigen, orthogonalen Raster vierkante Ausschnitte 18 aufweist, wobei die Ausschnitte 19 im Bereich der oberen Rohrbiegung 20 des Rohrs 5 eine abgerundete Ecke 21 aufweisen. Wie ferner ersichtlich, sind die Ausschnitte 18 und 19 ebenfalls mit einem aufstehenden, nach innen zeigenden Rand 22 versehen, um die Platte 17 eine grössere mechanische Stabilität zu verleihen. Wie bei der zweiten Variante sind die Längsseiten 23 ebenfalls mit einem längsgeschlitzten Rohrstück 24 versehen, die auf das Rohr 5 und das Querrohr 6 aufgeschnappt sind.

In der Praxis sind die Platte 12 bzw. die Platte 17 aus einem flexiblen Kunststoffmaterial, beispielsweise aus Polystyrol, Polyethylen oder Polypropylen, in einem Spritzgussprozess hergestellt.

## Patentansprüche

1. Vorrichtung (1) zum Transport von Behältnissen, wie Kartonschachteln oder Stapelbehältern aus Kunststoff, mit einer auf Rollen fahrbaren, im wesentlichen rechteckigen Bodenplatte (2) und auf dieser befestigbaren, sich gegenüberstehenden Wandelementen (3), die aus einem U-förmigen Rohr (5) und einem vom Rohr gehaltenen Gitter (9) bestehen, **dadurch gekennzeichnet, dass** das Gitter (9) ausschliesslich aus einem flexiblen Material gefertigt ist.

2. Vorrichtung nach Anspruch 1, **dadurch gekennzeichnet, dass** das Gitter (9) aus einem Kunststoffmaterial besteht.

3. Vorrichtung nach Anspruch 1, **dadurch gekennzeichnet, dass** das Gitter (9) aus einem Textilgewebe besteht.

4. Vorrichtung nach einem der Ansprüche 1 bis 3, **dadurch gekennzeichnet, dass** das Gitter (9) aus gekreuzt angeordneten Bändern (10) besteht.

5. Vorrichtung nach einem der Ansprüche 1 bis 3, **dadurch gekennzeichnet, dass** das Gitter (9) aus einer einteiligen Kunststoffplatte (12; 17) mit regelmässig darin verteilten Öffnungen (13; 18, 19) besteht.

6. Vorrichtung nach Anspruch 5, **dadurch gekennzeichnet, dass** die Ränder der Kunststoffplatte (12; 17) als Rohrstücke (15; 23) mit einem Längsschlitz ausgebildet sind, so dass die Rohrstücke auf das U-förmige Rohr (5) aufschnappbar sind.

7. Vorrichtung nach Anspruch 5 oder 6, **dadurch gekennzeichnet, dass** die Öffnungen (13; 18, 19) in einem viereckigen Raster auf der Kunststoffplatte (12; 17) verteilt sind.

8. Vorrichtung nach Anspruch 7, **dadurch gekennzeichnet, dass** die Öffnungen (18, 19) im Wesentlichen vierkant ausgebildet sind.

9. Vorrichtung nach Anspruch 7, **dadurch gekennzeichnet, dass** die Öffnungen (13) kreisförmig ausgebildet sind.

## Claims

1. An apparatus (1) for the transport of containers such as cardboard boxes or stacking boxes made of plastic, comprising a substantially rectangular base plate (2) which is movable on rollers and wall elements (3) which can be fastened to the same, stand opposite of one another and consist of a U-shaped tube (5) and a grating (9) held by the tube, **characterized in that** the grating (9) is exclusively made of a flexible material.

2. An apparatus according to claim 1, **characterized in that** the grating (9) is made of a plastic material.

3. An apparatus according to claim 1, **characterized in that** the grating (9) is made of a textile fabric.

4. An apparatus according to one of the claims 1 to 3, **characterized in that** the grating (9) consists of bands (10) arranged in crosses.

5. An apparatus according to one of the claims 1 to 3, **characterized in that** the grating (9) consists of an integral plastic plate (12; 17) with openings (13; 18, 19) distributed regularly therein.

6. An apparatus according to claim 5, **characterized in that** the edges of the plastic plate (12; 17) are arranged as tubular elements (15; 23) with a longitudinal slit, so that the tubular elements can be latched onto the U-shaped tube (5).

7. An apparatus according to claim 5 or 6, **characterized in that** the openings (13; 18, 19) are distributed in a four-cornered grid on the plastic plate (12; 17).

8. An apparatus according to claim 7, **characterized in that** the openings (18, 19) are arranged in a substantially square manner.

9. An apparatus according to claim 7, **characterized in that** the openings (13) are arranged in a circular manner.

## Revendications

1. Dispositif (1) pour le transport de récipients tels que des boîtes en carton ou des bacs empilables en matière plastique, avec une plaque de fond (2) sensiblement rectangulaire déplaçable sur des roulettes et des éléments de paroi (3) fixés sur celle-ci en se faisant face, qui se composent d'un tube en forme de U (5) et d'une grille (9) retenue par le tube, **caractérisé en ce que** la grille (9) est faite exclusivement d'un matériau flexible.

2. Dispositif selon la revendication 1, **caractérisé en ce que** la grille (9) est faite d'une matière plastique.

3. Dispositif selon la revendication 1, **caractérisé en ce que** la grille (9) est faite d'un treillis textile.

4. Dispositif selon l'une des revendications 1 à 3, **caractérisé en ce que** la grille (9) se compose de bandes (10) disposées en croix.

5. Dispositif selon l'une des revendications 1 à 3, **caractérisé en ce que** la grille (9) se compose d'une plaque en matière plastique (12 ; 17) d'un seul tenant dans laquelle des ouvertures (13 ; 18, 19) sont régulièrement réparties.

6. Dispositif selon la revendication 5, **caractérisé en ce que** les bords de la plaque en matière plastique (12 ; 17) sont réalisés comme des pièces tubulaires (15 ; 23) avec une fente longitudinale, de sorte que les pièces tubulaires peuvent être emboîtées sur le tube en forme de U (5).

7. Dispositif selon la revendication 5 ou 6, **caractérisé en ce que** les ouvertures (13 ; 18, 19) sont réparties selon un maillage quadrangulaire sur la plaque en matière plastique (12 ; 17).

8. Dispositif selon la revendication 7, **caractérisé en ce que** les ouvertures (18, 19) sont de forme sensiblement quadrangulaire.

9. Dispositif selon la revendication 7, **caractérisé en ce que** les ouvertures (13) sont de forme circulaire.
